# EUROPÄISCHE PATENTSCHRIFT

(11) **EP 2 796 247 B1**
(45) Veröffentlichungstag und Bekanntmachung des Hinweises auf die Patenterteilung: **05.12.2018**
(21) Anmeldenummer: 14163661.3
(22) Anmeldetag: 07.04.2014
(51) Int. Cl.: B25F 5/00

(54) **Werkzeugmaschine**
Machine tool
Machine-outil

(30) Priorität: 26.04.2013 DE 102013104271
(43) Veröffentlichungstag der Anmeldung: 29.10.2014
(73) Patentinhaber: C. & E. Fein GmbH, 73529 Schwäbisch Gmünd-Bargau (DE)
(72) Erfinder: Seebauer, Ralf, 71540 Murrhardt (DE)
(74) Vertreter: Roos, Michael

(56) Entgegenhaltungen:
- WO-A1-95/21039
- DE-A1- 10 352 242
- DE-A1- 19 733 796
- US-A- 4 347 450

## Beschreibung

Die Erfindung betrifft eine motorisch angetriebene Werkzeugmaschine mit einem Antriebsmotor, dessen Motorwelle rotierend angetrieben ist, mit einer Werkzeugantriebswelle, die um ihre Längsachse oszillierend angetrieben ist, und mit einem Koppeltrieb zur Umsetzung der Drehbewegung der Motorwelle in einer Antriebsbewegung der Werkzeugantriebswelle.

Derartige Werkzeugmaschinen sind seit Jahrzehnten bekannt und werden in vielfältiger Weise insbesondere als handgehaltene Elektrowerkzeuge eingesetzt. Hierbei gibt es sowohl Maschinen, bei denen die Werkzeugantriebswelle eine rotierende Drehbewegung ausführt, wie etwa bei Bohrmaschinen oder Winkelschleifern. Darüber hinaus sind in den letzten Jahren mehr und mehr Maschinen mit oszillierender Antriebsbewegung der Werkzeugantriebswelle gebräuchlich, wobei die Werkzeugantriebswelle oszillierend um ihre Längsachse angetrieben sein kann. Derartige oszillierende Werkzeugmaschinen werden in vielfältiger Weise zum Schleifen, Schneiden, Sägen usw. eingesetzt.

Insbesondere bei oszillierend angetriebenen Werkzeugmaschinen, aber auch bei bestimmten Werkzeugmaschinen mit rotierend angetriebener Werkzeugantriebswelle, wie bei Winkelschleifern, besteht das Problem, dass Vibrationen auftreten können, die sich nachteilig auf die Lebensdauer der Maschine auswirken und vom Benutzer als nachteilig empfunden werden.

Sind die Motorwellen und die Werkzeugantriebswelle nicht konzentrisch oder achsparallel zueinander ausgerichtet, so ergeben sich einseitige Beanspruchungen der Lager, und es kann ggf. im Laufe der Zeit zu Überlastungen, zu vorzeitigen Defekten oder Ausfällen kommen.

Bei oszillierend angetriebenen Werkzeugmaschinen wird die rotierende Antriebsbewegung der Motorwelle durch einen geeigneten Koppeltrieb in eine oszillierende Antriebsbewegung der Werkzeugantriebswelle umgesetzt. Hierbei kann es durch eine Vibrationsentkopplung oder Dämpfung zu einer Relativbewegung zwischen dem Antriebsmotor und dem Koppeltrieb kommen. Auch in diesem Fall ist eine konzentrische und achsparallele Ausrichtung von Motorachse und Werkzeugantriebswelle somit nicht mehr möglich.

Aus der EP 2 139 647 B1 ist eine oszillierend angetriebene Werkzeugmaschine 1 bekannt, bei der zwischen der Antriebswelle und der Motorantriebswelle ein Längenausgleich etwa unter Verwendung eines sternförmigen Profils vorgesehen ist, das in eine Bohrung mit entsprechender Profilierung eingreift.

Mit einer derartigen Ausführung wird allerdings nur ein Längenausgleich im Bereich des Antriebsstrangs ermöglicht.

Aus der WO 95/21039 A1 ist eine tragbare Werkzeugmaschine gemäß dem Oberbegriff von Anspruch bekannt, bei welcher zur Übertragung zwischen dem elektromotorischen Antrieb und der Werkzeugantriebswelle ein doppelte Kardangelenkverbindung vorgesehen ist.

Aus der DE 197 33 796 A1 ist ferner ein Hand-Oszillationsgerät bekannt, bei welchem ein Kreuzgelenk in Verbindung mit einer Teleskopwelle zur Übertragung der Antriebsbewegung vom Motor zum Oszillationsantrieb vorgesehen ist. Auf diese Weise wird eine Verstellbarkeit des Winkels zwischen einem Schleifkopf und dem Motor ermöglicht.

Ferner sei auf die US 4 347 450 A hingewiesen, die ein tragbares Handwerkzeug mit einem Kopfteil zeigt, das gegenüber einem langgestrecketen Antriebsteil eine Winkelverstellung erlaubt.

Aus der DE 103 52 242 A1 ist es ferner beim einem Modellfahrzeug bekannt, ein Wellengelenk zur Übertragung von Drehbewegungen zwischen drehbaren Teilen des Modellfahrzeugs mit einer Gelenkschalenwelle mit einer Gelenkschale mit zwei seitlichen, parallel bezüglich der Drehachse gerichteten Mitnahmeschlitzen und einer Kugelnabenwelle mit einer Kugelnabe mit zwei senkrecht zur Drehachse der Kugelnabenwelle gerichteten Zapfen auszubilden, die in die Mitnahmeschlitze der Gelenknabe eingreifen. Durch das Eingreifen der Zapfen der Kugelnabe in die Mitnahmeschlitze der Gelenkschale ist das Wellengelenk zur Übertragung von Drehbewegungen geeignet, wobei gleichzeitig die räumliche Ausrichtung der Gelenkschalenwelle und der Kugelnabenwelle veränderbar ist.

Allerdings ist die bekannte Anordnung nur zur Übertragung von Drehbewegungen bei Modellfahrzeugen vorgesehen, so dass eine Übertragung auf einen oszillierenden Antrieb einer Werkzeugmaschine nicht naheliegend erscheint.

Vor diesem Hintergrund liegt der Erfindung die Aufgabe zugrunde, eine Werkzeugmaschine mit einer oszillierend angetriebenen Werkzeugantriebswelle zu schaffen, die auch bei nicht-achsparalleler Anordnung von Motorwelle und Werkzeugantriebswelle Oszillationen reduziert und die Belastungen für die Lagerung und den Koppeltrieb zwischen Motorwelle und Werkzeugantriebswelle möglichst gering hält.

Diese Aufgabe wird durch eine Werkzeugmaschine gemäß Anspruch 1 gelöst. Die Aufgabe der Erfindung wird auf diese Weise gelöst.

Erfindungsgemäß wird durch die zusätzliche Kupplung die Gefahr von Vibrationen in Folge von bauartbedingtem Versatz oder Winkelfehler der Motorachse gegenüber eine konzentrischen oder achsparallelen Ausrichtung zur Werkzeugantriebswelle deutlich reduziert. Außerdem wird die Gefahr von Überlastungen der Lagerstellen und des Materials im Antriebsstrang deutlich reduziert. Bei vibrationsentkoppelten Werkzeugmaschinen mit oszillierend angetriebener Werkzeugantriebswelle wird die Gefahr von Überlastungen der Lagerstellen deutlich reduziert und gleichzeitig die Vibrationsbelastung beschränkt.

Die Kupplung umfasst ferner eine Kupplungswelle, die auf einer Antriebsseite mit der Motorwelle über eine erste Gelenkverbindung gekoppelt ist, und die auf einer Abtriebsseite über eine zweite Gelenkverbindung mit dem Koppeltrieb gekoppelt ist, wobei zwischen der Antriebsseite und der Abtriebsseite mindestens eine Schiebegelenkverbindung vorgesehen ist.

Auf diese Weise können Winkelfehler und Lageveränderungen zwischen der Motorwelle und der Werkzeugantriebswelle bzw. dem dazwischen angeordneten Koppeltrieb ausgeglichen werden.

Hierbei umfasst erfindungsgemäß die erste Gelenkverbindung einen ersten Kugelkopf, der an einer Innenoberfläche der Kupplungswelle geführt ist und der die Kupplungswelle über zwei erste Antriebsbolzen antreibt, wobei die zweite Gelenkverbindung einen zweiten an einer Innenoberfläche der Kupplungswelle geführten Kugelkopf umfasst, der von der Kupplungswelle über zwei zweite Antriebsbolzen angetrieben ist.

Gemäß einer Weiterbildung dieser Ausführung ist die Kupplungswelle als Hohlwelle mit einer Innenoberfläche ausgeführt, an der der erste und zweite Kugelkopf geführt sind.

Gemäß einer weiteren Ausgestaltung dieser Ausführung sind die ersten oder die zweiten Antriebsbolzen in Nuten der Kupplungswelle längsverschieblich aufgenommen.

Vorzugsweise sind sowohl die ersten als auch die zweiten Antriebsbolzen in Schlitzen in einer Wand der Kupplungswelle längsverschieblich geführt.

Mit diesen Maßnahmen wird eine einfache Ausgestaltung der Kupplung ermöglicht, die sowohl einen Winkelversatz als auch einen Lageversatz zwischen Motorwelle und Werkzeugantriebswelle bzw. zwischen Motorwelle und Koppelgetriebe ausgleicht.

Gemäß einer weiteren Ausgestaltung der Erfindung ist ein Gehäuse vorgesehen, mit einem Motorgehäuseabschnitt zur Aufnahme des Antriebsmotors und mit einem Getriebegehäuseabschnitt zur Aufnahme der Werkzeugantriebswelle und vorzugsweise des Koppeltriebs, wobei Mittel vorgesehen sind, die Relativbewegungen zwischen der Werkzeugantriebswelle und dem Antriebsmotor erlauben.

Hierbei können etwa der Motorgehäuseabschnitt und der Getriebegehäuseabschnitt nachgiebig miteinander verbunden sein.

Alternativ oder zusätzlich kann zwischen dem Koppeltrieb und dem Antriebsmotor mindestens ein Dämpfungselement zur Vibrationsentkopplung vorgesehen ist.

Sind Relativbewegungen zwischen der Werkzeugantriebswelle und dem Antriebsmotor möglich, so werden weniger Vibrationen auf den Antriebsmotor übertragen. Wird die Werkzeugmaschine mit der Hand im Bereich des Motorgehäuses gehalten, so werden deutlich weniger Vibrationen auf den Benutzer übertragen. Die Reduzierung von Vibrationen an Antriebsmotor und damit verbundenem Akkumulator wirkt sich auch vorteilhaft auf die Lebensdauer aus.

Ausgleichsbewegungen zwischen Antriebsmotor und Werkzeugantriebswelle oder Koppeltrieb bzw. zwischen dem Getriebegehäuse und dem Motorgehäuse werden durch die Kupplung aufgefangen.

Durch die Anordnung mindestens eines Dämpfungselementes zwischen dem Koppeltrieb und dem Antriebsmotor werden die Vibrationen weiter reduziert.

Gemäß einer weiteren Ausgestaltung der Erfindung weist der Koppeltrieb einen Exzenterkoppeltrieb zur Umsetzung einer rotierenden Antriebsbewegung der Motorwelle in eine oszillierende Bewegung der Werkzeugantriebswelle um ihre Längsachse auf.

In alternativer Weise der Erfindung ist die Werkzeugantriebswelle rotierend angetrieben, wobei die Maschine als Winkelschleifer ausgebildet ist, bei dem der Koppeltrieb als Winkelgetriebe, insbesondere als Kegelradgetriebe ausgebildet ist.

Auch bei einer derartigen Ausführung ergeben sich die Vorteile der Erfindung durch Reduzierung der Lagerbelastung und den möglichen Ausgleich von Vibrationen, die während des Betriebs auftreten können.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus Beschreibung bevorzugter Ausführungsbeispiele unter Bezugnahme auf die Zeichnung. näher erläutert. Es zeigen:
- Fig. 1: Eine erste perspektivische Ansicht einer erfindungsgemäßen Werkzeugmaschine mit einer oszillierend angetriebenen Werkzeugantriebswelle, wobei eine Gehäusehälfte abgenommen ist;
- Fig. 2: eine teilweise freigeschnittene Ansicht gemäß Fig. 1, aus der weitere Einzelheiten ersichtlich sind;
- Fig. 3: einen Längsschnitt durch die Werkzeugmaschine gemäß Fig. 1;
- Fig. 4 und 5: perspektivische Ansichten der Kupplung gemäß der Fig. 1 bis 3 in vergrößerter Darstellung in zwei verschiedenen Drehstellungen;
- Fig. 6: einen perspektivischen Teilausschnitt im Bereich des Antriebsmotors, der Kupplung und des Koppelgetriebes gemäß Fig. 3;
- Fig. 7: eine Ansicht gemäß Fig. 6 mit leicht veränderter Anordnung zwischen Motorwelle und Koppelgetriebe;
- Fig. 8: eine perspektivische Ansicht einer weiteren Werkzeugmaschine mit rotierender Werkzeugantriebswelle in Form eines Winkelschleifers;
- Fig. 9: eine schematische Darstellung einer Abwandlung der Kupplung gemäß der Fig. 4 und 5 und
- Fig. 10: eine vereinfachte schematische Darstellung der Getriebeanordnung bei dem Winkelschleifer gemäß Fig. 8.

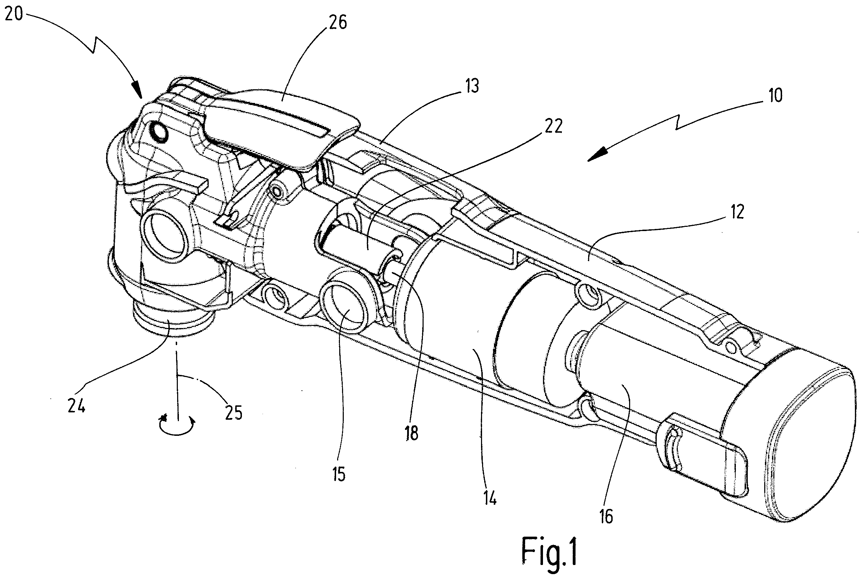

In den Fig. 1 bis 3 ist eine erste Ausführung einer erfindungsgemäßen Werkzeugmaschine insgesamt mit der Ziffer 10 bezeichnet. Es handelt sich um eine oszillierend angetriebene Werkzeugmaschine 10 mit einem Motorgehäuse 12, in dem ein Antriebsmotor 14 aufgenommen ist, und mit einem Getriebegehäuse 13, in dem eine Werkzeugantriebswelle 24 aufgenommen ist. Eine Drehbewegung der Motorwelle 18 wird über eine Kupplung 22 und einen zugeordneten Koppeltrieb 20 in eine oszillierend angetriebene Antriebsbewegung der Werkzeugantriebswelle 24 um ihre Längsachse 25 umgesetzt.

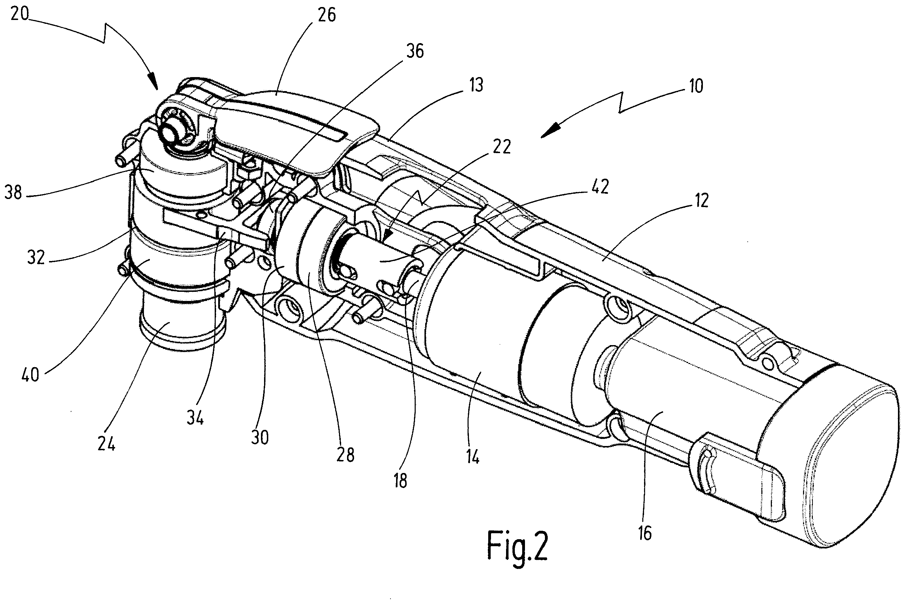

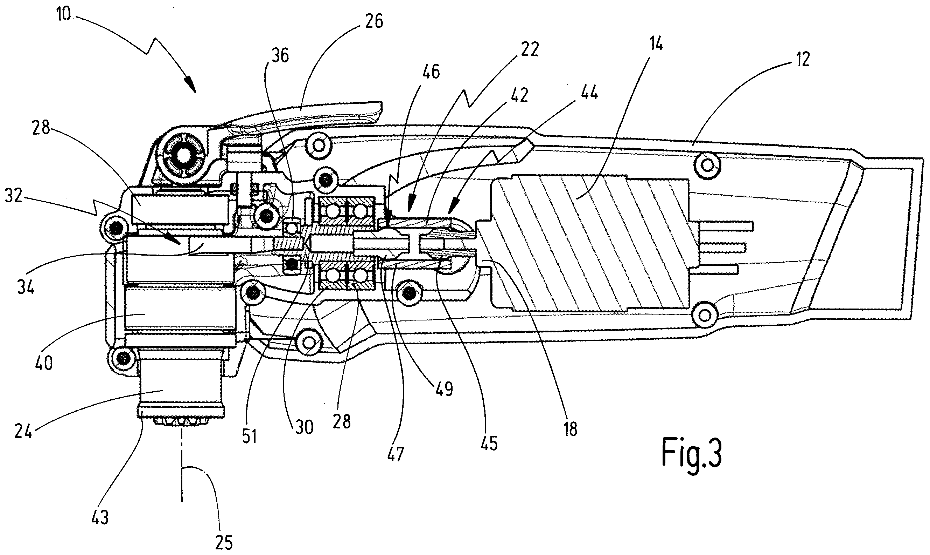

Am äußeren Ende der Werkzeugantriebswelle 24, das aus dem Gehäuse 12 nach außen hervorsteht, ist eine Werkzeugaufnahme 43 (Fig. 3) vorgesehen, an der ein zugeordnetes Werkzeug, z.B. ein Schleif-, Schneid- oder Sägewerkzeug mit Hilfe einer Schnellspanneinrichtung (nicht dargestellt) unter Zuhilfenahme eines Spannhebels 26 befestigt werden kann. Die Werkzeugantriebswelle 24 ist mit Hilfe zweier Lager 38, 40 am Gehäuse 12 gelagert (Fig. 2 und 3).

Der Antriebsmotor 14 treibt über seine Motorwelle 18 eine Kupplung 22 an, mit einer ersten Gelenkverbindung 44 auf der Seite der Motorwelle 18 mit einem ersten Kugelkopf 45 und mit einer zweiten Gelenkverbindung 46 mit einem zweiten Kugelkopf 47 auf der Abtriebsseite. Der zweite Kugelkopf 47 ist mit einer Zwischenwelle 51 verbunden, die mittels zweier Lager 28, 30 am Gehäuse 12 gelagert ist und die die Werkzeugantriebswelle 24 über den Koppeltrieb 20 oszillierend antreibt.

Hierzu ist ein Exzenterkoppeltrieb 32 vorgesehen, der ein Exzenterlager 36 auf der Zwischenwelle 51 aufweist, an dem ein drehfest mit der Werkzeugantriebswelle 24 verbundener Exzenterhebel 34 beidseitig angreift. Der Exzenterhebel 34 ist insbesondere aus Fig. 2 näher ersichtlich. Er weist eine U-förmig ausgebildete Gabel auf, deren beide Enden das Exzenterlager 36 von außen umgreifen. Auf diese Weise wird eine Exzenterbewegung des Exzenterlagers 36 auf dem Ende der Zwischenwelle 51 in eine oszillierende Bewegung der Werkzeugantriebswelle 24 um ihre Längsachse 25 umgesetzt.

Der Exzenterkoppeltrieb 32 und die Werkzeugantriebswelle 24 sind vibrationsmäßig vom Antriebsmotor 14 entkoppelt. Hierzu sind im Übergangsbereich zwischen dem Motorgehäuse 12 und dem Getriebegehäuse 13 auf beiden Seiten je ein Dämpfungselement 15 angeordnet, so dass eine gewisse Nachgiebigkeit zwischen Motorgehäuse 12 und Getriebegehäuse 13 und zusätzlich eine Vibrationsdämpfung gegeben sind. In Fig. 1 ist nur eine Aufnahme für ein Dämpfungselement 15 erkennbar. Darin ist als Dämpfungselement ein Gummipfropfen aufgenommen.

Auf diese Weise wird die Übertragung von Vibrationen von der Werkzeugantriebswelle 24 und dem Exzenterkoppeltrieb 32 auf den Antriebsmotor 14 und den damit verbundenen Akkumulator 16 verringert. Ein Benutzer, der die Werkzeugmaschine 10 am Motorgehäuse 12 hält, erfährt wesentlich weniger Vibrationen.

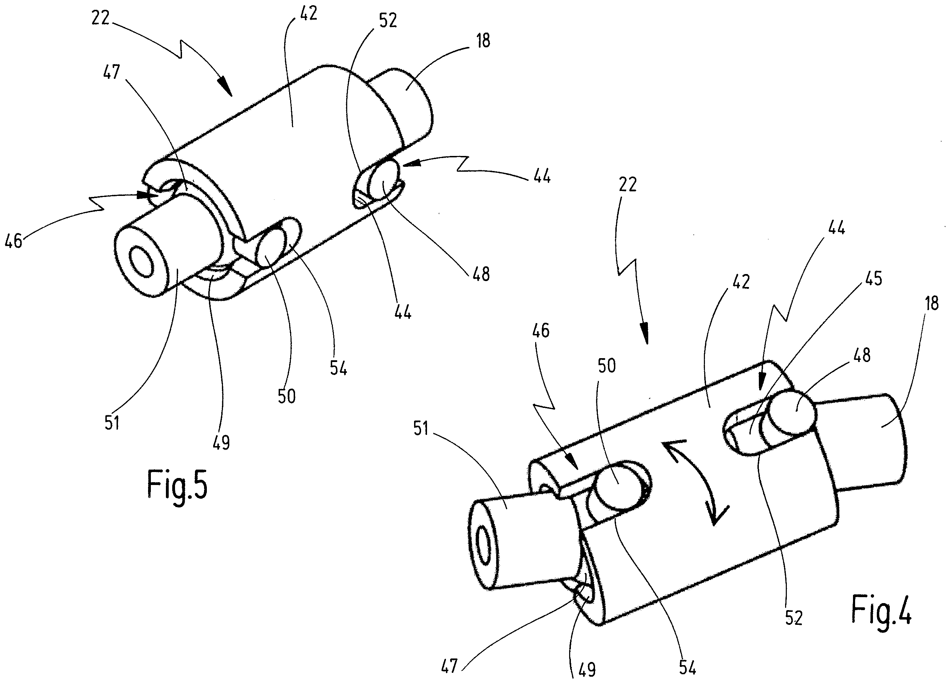

Die nähere Ausgestaltung der zwischen dem Koppeltrieb 20 und dem Antriebsmotor 14 vorgesehenen Kupplung 22 ist insbesondere aus den Fig. 4 und 5 ersichtlich.

Die Kupplung 22 weist eine hohlzylindrische Kupplungswelle 42 auf, die über eine erste Gelenkverbindung 44 mit von der Motorwelle 18 angetrieben wird und die die Zwischenwelle 51 über eine zweite Gelenkverbindung 46 antreibt.

Die erste Gelenkverbindung 44 weist einen ersten Kugelkopf 45 auf, der starr und drehfest mit dem Ende der Motorwelle 18 verbunden ist. Seitlich stehen aus dem ersten Kugelkopf 45 zu beiden einander gegenüberliegenden Seiten hin zwei erste Antriebsbolzen 48 hervor, die in zugeordneten Schlitzen 52 in der Mantelfläche der Kupplungswelle 42 geführt sind. Der erste Kugelkopf 45 ist umfangsmäßig an einer zylindrischen Innenoberfläche 49 der Kupplungswelle 42 geführt.

Die zweite Gelenkverbindung 46 weist einen zweiten Kugelkopf 47 auf, der mit der Werkzeugantriebswelle 24 verbunden ist und der gleichfalls an der hohlzylindrischen Innenoberfläche 49 der Kupplungswelle 42 geführt ist. Auch sind am zweiten Kugelkopf 47 zwei einander gegenüberliegende zweite Antriebsbolzen 50 vorgesehen, die in zugeordneten Schlitzen 54 in der Mantelfläche der Kupplungswelle 42 längsverschieblich geführt sind. Der zweite Kugelkopf 47 ist mit der Zwischenwelle 51 starr und drehfest verbunden.

Die Kupplung 22 erlaubt einen Winkelversatz und eine Lageveränderung zwischen der Motorwelle 18 und der Zwischenwelle 51.

Sollte sich also etwa infolge von Vibrationen eine präzise Ausrichtung zwischen der Zwischenwelle 51 und der Motorwelle 18 verändern, so ermöglicht die Kupplung 22 einen flexiblen Ausgleich. Gleichfalls ist es denkbar, die Zwischenwelle 51 in und die Motorwelle 18 winkelmäßig oder lagemäßig versetzt zueinander anzuordnen.

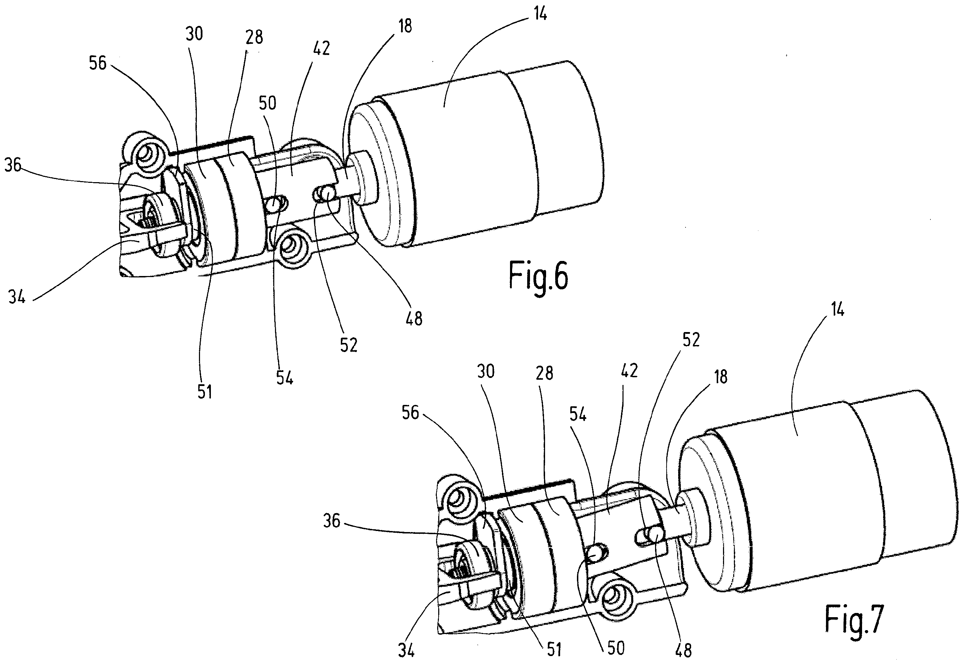

Die Fig. 6 und 7 zeigen unterschiedliche Anordnungen zwischen der Zwischenwelle 51 und der Motorwelle 18. Während diese bei der Ausführung gemäß Fig. 6 miteinander fluchtend ausgerichtet sind, ergibt sich bei der Ausführung gemäß Fig. 7 ein deutlicher Winkelversatz zwischen der Motorwelle 18 und der Zwischenwelle 51. Dieser Winkelversatz wird von der Kupplung 22 ausgeglichen.

In den Fig. 6 und 7 ist zusätzlich ein Ausgleichsgewicht 56 an der Zwischenwelle 51 dargestellt, das zum Massenausgleich bei der Drehung des Exzenterlagers 36 vorgesehen ist.

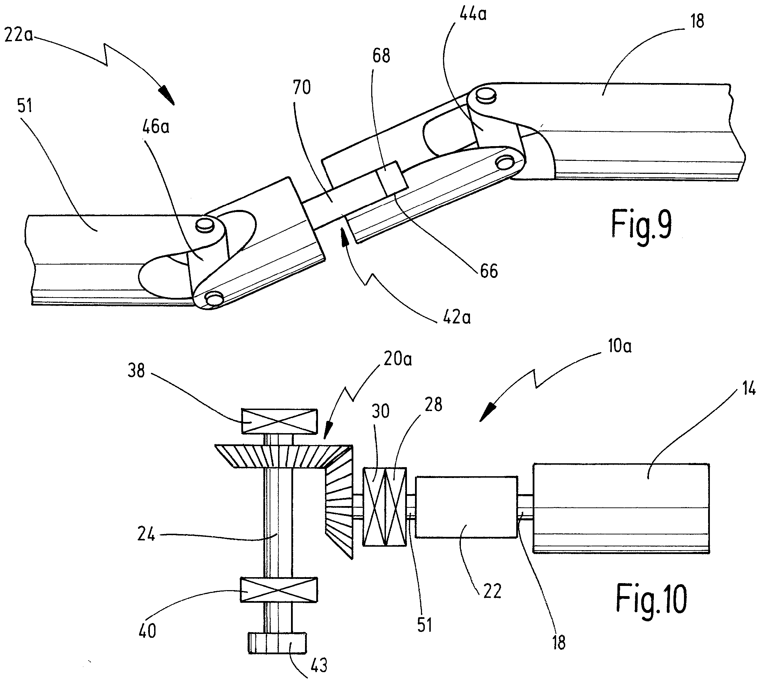

In Fig. 9 ist eine Abwandlung der zuvor beschriebenen Kupplung dargestellt und insgesamt mit 22a bezeichnet. Dabei werden für entsprechende Teile entsprechende Bezugsziffern verwendet, die teilweise durch "a" ergänzt sind.

Hierbei treibt die Motorwelle 18 die Kupplungswelle 42a über eine erste Gelenkverbindung 44a in Form eines Kardangelenkes an, während das Abtriebsende der Kupplungswelle 42a die Zwischenwelle 51 über eine zweite Gelenkverbindung 46a in Form einer Kardangelenkverbindung antreibt. Die Kupplungswelle 42a umfasst ferner eine Schiebegelenkverbindung, die schematisch mit 66 angedeutet ist, und die etwa einen Schlitz 68 umfassen kann, in den ein zugeordneter Schieber 70 eingreift.

Es versteht sich, dass auch andere Ausgestaltungen einer Schiebegelenkverbindung verwendet werden können, beispielsweise etwa ein Schieber etwa in Form eines Polygons, der an einer zugeordneten Innenoberfläche eines Gegenstückes geführt ist.

Grundsätzlich ist auch eine derartige Kupplung 22a mit zwei Kardangelenkverbindungen 44a, 46a und einer Schiebegelenkverbindung 66 möglich, um einen Winkelausgleich und einen Lageausgleich zwischen Motorwelle 18 und Zwischenwelle 51 zu bewirken. Jedoch weist die zuvor beschriebene Ausführung der Kupplung 22 gemäß der Fig. 1 bis 7 insgesamt einen einfacheren Aufbau auf.

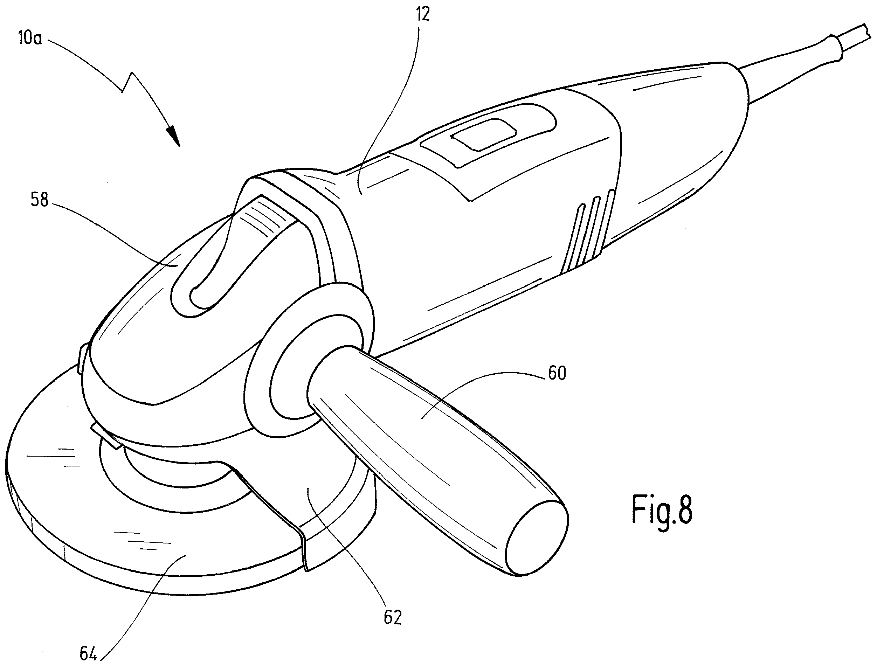

In den Fig. 8 und 10 ist eine Abwandlung der Werkzeugmaschine dargestellt und insgesamt mit 10a bezeichnet.

Es handelt sich hierbei um eine Ausgestaltung der Werkzeugmaschine in Form eines Winkelschleifers mit einem Getriebekopf 58 gemäß Fig. 8, einem seitlichen Handgriff 60 zum Halten der Maschine, und mit einer üblichen Schutzhaube 62, die als Berstschutz für ein Werkzeug in Form einer Schleif- oder Trennscheibe dient.

Wie aus Fig. 10 ersichtlich, ist hierbei der im Getriebekopf 58 aufgenommene Koppeltrieb 20a als Kegelrad-Winkelgetriebe aufgebaut. Die mittels zweier Lager 38, 40 gelagerte Werkzeugantriebswelle 24 ist somit rotierend angetrieben. Die Motorwelle 18 des Antriebsmotors 14 treibt die mittels zweier Lager 28, 30 gelagerte Zwischenwelle über eine Kupplung 22 gemäß der zuvor anhand von Fig. 4 und 5 beschriebenen Ausgestaltung an. An der Zwischenwelle 51 befindet sich ein Antriebsritzel in Form eines Kegelzahnrads, das ein zugeordnetes Abtriebsrad in Form eines Kegelzahnrads auf der Werkzeugantriebswelle 24 antreibt.

Auch bei dieser Ausführung dient die zusätzliche Kupplung 22 zur Reduzierung von Vibrationen, die beim Betrieb des Winkelschleifers auftreten können. Außerdem ermöglicht es die Kupplung 22, einen Winkel- oder Lageversatz zwischen der Motorwelle 18 und der Zwischenwelle 51 zu verwenden. Auch könnte der Koppeltrieb 20a mit dem Kegelradgetriebe in einem von 90° abweichenden Winkel ausgebildet sein.

Die Kupplung 22 bzw. 22a erlaubt Lage- und Winkelveränderungen zwischen der Antriebswelle 24 und der Motorwelle 18 im Betrieb. Es ist daher sinnvoll, eine gewisse Nachgiebigkeit in der Lagerung etwa des Koppeltriebs 20 bzw. 20a oder der Werkzeugantriebswelle 24 oder Motorwelle 18 vorzusehen, um Ausgleichsbewegungen zuzulassen, die sich während des Betriebs ergeben können. Es reicht hierzu aus, eine gewisse Nachgiebigkeit zwischen dem Motorgehäuse 12 und dem Getriebegehäuse 13 vorzusehen. Vorteilhaft sind jedoch zusätzlich Dämpfungselemente 15 zur Vibrationsdämpfung im Übergangsbereich zwischen Motorgehäuse 12 und dem Getriebegehäuse 13 vorgesehen, wie vorstehend bereits erläutert wurde.

## Patentansprüche

1. Motorisch angetriebene Werkzeugmaschine mit einem Antriebsmotor (16), dessen Motorwelle (18) rotierend angetrieben ist, mit einer Werkzeugantriebswelle (24), die um ihre Längsachse (25) oszillierend angetrieben ist, und mit einem Koppeltrieb (20) zur Umsetzung der Drehbewegung der Motorwelle (18) in eine oszillierende Antriebsbewegung der Werkzeugantriebswelle (24), wobei eine Kupplung (22) vorgesehen ist, die zumindest einen Winkelversatz zwischen der Motorwelle (18) und der Werkzeugantriebswelle (24) ausgleicht, der von einer achsparallelen oder rechtwinkligen Anordnung der beiden Wellen (18, 24) abweicht, wobei die Kupplung (22) eine Kupplungswelle (42; 42a) umfasst, die auf einer Antriebsseite mit der Motorwelle (18) über eine erste Gelenkverbindung (44) gekoppelt ist, und die auf einer Abtriebsseite über eine zweite Gelenkverbindung (46) mit dem Koppeltrieb (20) gekoppelt ist, und wobei zwischen der Antriebsseite und der Abtriebsseite mindestens eine Schiebegelenkverbindung (48, 52, 50, 54) vorgesehen ist, **dadurch gekennzeichnet, dass** die erste Gelenkverbindung (44) einen ersten Kugelkopf (45) umfasst, der an einer Innenoberfläche (49) der Kupplungswelle (42) geführt ist und der die Kupplungswelle (42) über zwei erste Antriebsbolzen (48) antreibt, und dass die zweite Gelenkverbindung (46) einen zweiten an einer Innenoberfläche (49) der Kupplungswelle (42) geführten Kugelkopf (47) umfasst, der von der Kupplungswelle (42) über zwei zweite Antriebsbolzen (50) angetrieben ist.

2. Werkzeugmaschine nach Anspruch 1, **dadurch gekennzeichnet, dass** die Kupplungswelle (42) als Hohlwelle mit einer Inneroberfläche (49) ausgeführt ist, an der der erste (45) und zweite (47) Kugelkopf geführt sind.

3. Werkzeugmaschine nach 1 oder 2, **dadurch gekennzeichnet, dass** mindestens die ersten (48) oder die zweiten (50) Antriebsbolzen in Nuten (52, 54) der Kupplungswelle (42) längsverschieblich aufgenommen sind.

4. Werkzeugmaschine nach Anspruch 3, **dadurch gekennzeichnet, dass** sowohl die ersten (48) als auch die zweiten (50) Antriebsbolzen in Schlitzen (52, 54) in einer Wand der Kupplungswelle (42) längsverschieblich geführt sind.

5. Werkzeugmaschine nach einem der vorhergehenden Ansprüche, **dadurch gekennzeichnet, dass** ein Gehäuse (12) vorgesehen ist, mit einem Motorgehäuseabschnitt (12) zur Aufnahme des Antriebsmotors (14), und mit einem Getriebegehäuseabschnitt (13) zur Aufnahme der Werkzeugantriebswelle (24), und vorzugsweise des Koppeltriebs (20, 20a), wobei Mittel (15) vorgesehen sind, die Relativbewegungen zwischen der Werkzeugantriebswelle (24) und dem Antriebsmotor (14) erlauben.

6. Werkzeugmaschine nach Anspruch 5, **dadurch gekennzeichnet, dass** der Motorgehäuseabschnitt (12) und der Getriebegehäuseabschnitt (13) nachgiebig miteinander verbunden sind.

7. Werkzeugmaschine nach Anspruch 5 oder 6, **dadurch gekennzeichnet, dass** zwischen dem Koppeltrieb (20, 20a) und dem Antriebsmotor (14) mindestens ein Dämpfungselement (15) zur Vibrationsentkopplung vorgesehen ist.

8. Werkzeugmaschine nach einem der vorhergehenden Ansprüche, **dadurch gekennzeichnet, dass** der Koppeltrieb (20) einen Exzenterkoppeltrieb (32) zur Umsetzung einer rotierenden Antriebsbewegung der Motorwelle (18) in eine oszillierende Bewegung der Werkzeugantriebswelle (24) um ihre Längsachse (25) aufweist.

9. Werkzeugmaschine nach einem der Ansprüche 1 bis 7, **dadurch gekennzeichnet, dass** die Werkzeugantriebswelle (24) rotierend angetrieben ist, und dass die Maschine als Winkelschleifer (10a) ausgebildet ist, bei dem der Koppeltrieb (20a) als Winkelgetriebe, insbesondere als Kegelradgetriebe ausgebildet ist.

## Claims

1. Motor-driven power tool having a drive motor (16), the motor shaft (18) of which is driven in a rotating manner, comprising a tool driveshaft (24) which is driven in an oscillating manner about its longitudinal axis (25), and comprising a coupling gear (20) for converting the rotational movement of the motor shaft (18) into an oscillating driving movement of the tool driveshaft (24), wherein a coupling (22) is provided which compensates for at least an angular offset between the motor shaft (18) and the tool driveshaft (24), which deviates from an axis-parallel or right-angled arrangement of the two shafts (18, 24), wherein the coupling (22) comprises a coupling shaft (42; 42a), which is coupled on a drive side to the motor shaft (18) via a first joint connection (44), and which is coupled on an output side via a second joint connection (46) to the coupling gear (20), and wherein at least one sliding joint coupling (48, 52, 50, 54) is provided between the drive side and the output side, **characterised in that** the first joint connection (44) comprises a first ball head (45), which is guided on an inner surface (49) of the coupling shaft (42) and which drives the coupling shaft (42) via two first drive pins (48), and **in that** the second joint connection (46) comprises a second ball head (47) guided on an inner surface (49) of the coupling shaft (42), which is driven by the coupling shaft (42) via two second drive pins (50).

2. Power tool according to claim 1, **characterised in that** the coupling shaft (42) is embodied as a hollow shaft with an inner surface (49) on which the first (45) and second (47) ball heads are guided.

3. Power tool according to claim 1 or 2, **characterised in that** at least the first (48) or the second (50) drive pins are received, in a longitudinally movable manner, in grooves (52, 54) of the coupling shaft (42).

4. Power tool according to claim 3, **characterised in that** both the first (48) and the second (50) drive pins are guided, in a longitudinally movable manner, in slots (52, 54) in a wall of the coupling shaft (42).

5. Power tool according to any of the preceding claims, **characterised in that** a housing (12) is provided, comprising a motor housing section (12) for receiving the drive motor (14), and comprising a gear housing section (13) for receiving the tool driveshaft (24), and preferably the coupling gear (20, 20a), wherein means (15) are provided which allow the relative movements between the tool driveshaft (24) and the drive motor (14).

6. Power tool according to claim 5, **characterised in that** the motor housing section (12) and the gear housing section (13) are resiliently connected to each other.

7. Power tool according to claim 5 or 6, **characterised in that** at least one damping element (15) is provided for vibration decoupling, between the coupling gear (20, 20a) and the drive motor (14).

8. Power tool according to any of the preceding claims **characterised in that** the coupling gear (20) comprises an eccentric coupling gear (32) for converting the rotational drive movement of the motor shaft (18) into an oscillating movement of the tool drive shaft (24) about its longitudinal axis (25).

9. Power tool according to one of claims 1 to 7, **characterised in that** the tool drive shaft (24) is rotationally driven, and **in that** the tool is embodied as an angle grinder (10a), in which the coupling gear (20a) is embodied as an angular gear, in particular as a bevel gear.

## Revendications

1. Machine-outil commandée par moteur, comprenant un moteur d'entraînement (16) dont l'arbre moteur (18) est entraîné en rotation, un arbre d'entraînement d'outil (24) qui est entraîné de manière à osciller autour de son axe longitudinal (25) et une commande de couplage (20) pour convertir le mouvement rotatif de l'arbre moteur (18) en un mouvement d'entraînement oscillant de l'arbre d'entraînement d'outil (24), dans laquelle il est prévu un couplage (22) qui compense au moins un décalage angulaire entre l'arbre moteur (18) et l'arbre d'entraînement d'outil (24), qui dérive d'un agencement à axes parallèles ou à angle droit des deux arbres (18, 24), dans laquelle le couplage (22) comprend un arbre de couplage (42 ; 42a) qui est couplé d'un côté d'entraînement avec l'arbre moteur (18) via une première articulation (44) et qui est couplé d'un côté de sortie via une seconde articulation (46) avec la commande de couplage (20), et dans laquelle il est prévu entre le côté d'entraînement et le côté de sortie au moins une articulation à coulisse (48, 52, 50, 54), **caractérisé en ce que** la première articulation (44) comprend une première tête sphérique (45) qui est guidée sur une surface interne (49) de l'arbre de couplage (42) et qui entraîne l'arbre de couplage (42) via deux premières broches d'entraînement (48) et la seconde articulation (46) comprend une seconde tête sphérique (47) guidée sur une surface interne (49) de l'arbre de couplage (42), qui est entraînée par l'arbre de couplage (42) via deux secondes broches d'entraînement (50).

2. Machine-outil selon la revendication 1, **caractérisée en ce que** l'arbre de couplage (42) se présente sous la forme d'un arbre creux avec une surface interne (49), sur laquelle la première (45) et la seconde (47) tête sphérique sont guidées.

3. Machine-outil selon la revendication 1 ou 2, **caractérisée en ce qu'**au moins la première (48) ou la seconde (50) broche d'entraînement est reçue dans des rainures (52, 54) de l'arbre de couplage (42) par déplacement longitudinal.

4. Machine-outil selon la revendication 3, **caractérisée en ce qu'**autant la première (48) que la seconde (50) broche d'entraînement sont guidées dans des fentes (52, 54) d'une paroi de l'arbre de couplage (42) par déplacement longitudinal.

5. Machine-outil selon l'une quelconque des revendications précédentes, **caractérisée en ce qu'**il est prévu un boîtier (12) comprenant une section de boîtier de moteur (12) pour recevoir le moteur d'entraînement (14) et une section de boîtier de transmission (13) pour recevoir l'arbre d'entraînement d'outil (24) et, de préférence, la commande de couplage (20, 20a), dans laquelle il est prévu des moyens (15) qui permettent des déplacements relatifs entre l'arbre d'entraînement d'outil (24) et le moteur d'entraînement (14).

6. Machine-outil selon la revendication 5, **caractérisée en ce que** la section de boîtier de moteur (12) et la section de boîtier de transmission (13) sont reliées l'une à l'autre de manière souple.

7. Machine-outil selon la revendication 5 ou 6, **caractérisée en ce qu'**il est prévu entre la commande de couplage (20, 20a) et le moteur d'entraînement (14) au moins un élément d'amortissement (15) pour neutraliser les vibrations.

8. Machine-outil selon l'une quelconque des revendications précédentes, **caractérisée en ce que** la commande de couplage (20) présente une commande de couplage à excentrique (32) pour convertir un mouvement d'entraînement rotatif de l'arbre moteur (18) en un mouvement oscillant de l'arbre d'entraînement d'outil (24) autour de son axe longitudinal (25).

9. Machine-outil selon l'une quelconque des revendications 1 à 7, **caractérisée en ce que** l'arbre d'entraînement d'outil (24) est entraîné en rotation et la machine se présente sous la forme d'une meuleuse d'angle (10a), dans laquelle la commande de couplage (20a) se présente sous la forme d'une transmission d'angle, en particulier d'un engrenage conique.
